# EUROPÄISCHE PATENTSCHRIFT

(11) **EP 3 707 448 B1**
(45) Veröffentlichungstag und Bekanntmachung des Hinweises auf die Patenterteilung: **23.08.2023**
(21) Anmeldenummer: 18815526.1
(22) Anmeldetag: 21.11.2018
(51) Int. Cl.: F25J 1/00, F25J 1/02, F25J 5/00, B33Y 80/00

(54) **VORRICHTUNG UND ANLAGE ZUM VERFLÜSSIGEN WENIGSTENS EINES GASES**
DEVICE AND SYSTEM FOR CONDENSING AT LEAST ONE GAS
DISPOSITIF ET INSTALLATION POUR LIQUÉFIER AU MOINS UN GAZ

(30) Priorität: 22.12.2017 DE 102017223669
(43) Veröffentlichungstag der Anmeldung: 16.09.2020
(73) Patentinhaber: Siemens Aktiengesellschaft, 80333 München (DE)
(72) Erfinder: KIENER, Christoph, 81369 München (DE)
(74) Vertreter: Siemens Patent Attorneys
(86) Internationale Anmeldenummer: PCT/EP2018/081995
(87) Internationale Veröffentlichungsnummer: WO 2019/120833

(56) Entgegenhaltungen:
- DE-C- 861 852
- GB-A- 191 016 615
- US-A- 3 021 683
- US-A1- 2006 260 327

## Beschreibung

Die Erfindung betrifft eine Vorrichtung und eine Anlage zum Verflüssigen wenigstens eines Gases.

Anlagen und Vorrichtungen zum Verflüssigen wenigstens eines Gases können beispielsweise in Energiewende-Szenarien dezentral eingesetzt und genutzt werden, um beispielsweise temporär im Überschuss erzeugte und in ein Stromnetz gespeicherte elektrische Energie aufzunehmen und in ein energiespeicherndes Medium wie beispielsweise eine Flüssigkeit umzuwandeln. Diese Flüssigkeit wird beispielsweise als Tiefkalt-Flüssiggas aus dem zuvor genannten, wenigstens einen Gas hergestellt. Mit anderen Worten kann beispielsweise die jeweilige Anlage beziehungsweise Vorrichtung überschüssige elektrische Energie nutzen, um das zuvor genannte Gas zu verflüssigen und somit aus dem Gas eine Flüssigkeit insbesondere als Tiefkalt-Flüssiggas herzustellen. Als die Flüssigkeit wird beispielsweise flüssige Luft, flüssiges Erdgas, flüssiger Stickstoff, flüssiges Argon oder eine andere Flüssigkeit hergestellt. Dieses Tiefkalt-Flüssiggas kann auch genutzt werden, um dezentral aus kleinen Erzeugungsanlagen Bauteile zu kühlen, beispielsweise elektrische Baugruppen mit supraleitenden Bauteilen.

Eine solche Vorrichtung beziehungsweise Anlage zum Verflüssigen wenigstens eines Gases weist jedoch üblicherweise eine Vielzahl an Bauteilen auf und ist kostenintensiv in ihrer Herstellung, sodass das dezentrale Verflüssigen von Gas und somit die Nutzung von überschüssiger elektrischer Energie zum Verflüssigen des Gases heute noch nicht wirtschaftlich ist. Anlagen beziehungsweise Vorrichtungen zum Verflüssigen eines Gases sind derzeit bauraumintensiv und lassen sich nicht unter ein bestimmtes Maß verkleinern, ohne im Betrieb verfahrenstechnisch unwirtschaftlich zu werden. Darüber hinaus sind derartige Anlagen beziehungsweise Vorrichtungen aus einer Reihe von Baueinheiten zusammengesetzt, welche einzeln eingebaut und miteinander verbunden werden müssen. Bei derartigen, separat voneinander hergestellten und miteinander zu verbindenden Baueinheiten handelt es sich beispielsweise um Wärmetauscher, einen Tiefkalt-Speichertank, eine Drosseldüse, Isolierungsmaterial, Verrohrungen, Demistoren beziehungsweise Tröpfchenabscheider sowie weitere Bauelemente. Dadurch werden solche Anlagen beziehungsweise Vorrichtungen in ihren spezifischen kapazitätsbezogenen Investitionssummen unverhältnismäßig kostenintensiv. Die zentral und fluktuierend betriebenen kleinen Anlagen beziehungsweise Vorrichtungen könnten jedoch einen Ausgleich zwischen Einspeisung und Verbrauch im elektrischen Netz schon auf lokaler oder regionaler Ebene ermöglichen und bei entsprechend niedrigen spezifischen Betriebs- und Investitionskosten Netzpufferungen und die Herstellung eines Speicherprodukts auf regionaler Ebenen bewirken, wobei als das Speicherprodukt die genannte Flüssigkeit aus dem Gas hergestellt werden kann. Für Anwendungen mit geringem Kältebedarf bei tiefkalten Temperaturen kälter als - 100 °C ist der Bedarf an einer kleinen, kompakten und einfach betreibbaren Erzeugungsanlage von tiefkaltem Flüssiggas ebenfalls gegeben. US3021683 A offenbart eine Vorrichtung zum Verflüssigen wenigstens eines Gases entsprechend des Oberbegriffs des unabhängigen Anspruchs 1.

Aufgabe der vorliegenden Erfindung ist es, eine Vorrichtung und eine Anlage bereitzustellen, mittels welchen wenigstens ein Gas effizient sowie bauraum- und kostengünstig verflüssigt werden kann.

Diese Aufgabe wird erfindungsgemäß durch eine Vorrichtung mit den Merkmalen des Patentanspruchs 1 sowie durch eine Anlage mit den Merkmalen des Patentanspruchs 10 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zum Verflüssigen wenigstens eines Gases, sodass im Rahmen des Verflüssigens aus dem wenigstens einen Gas eine Flüssigkeit hergestellt wird. Die Vorrichtung weist wenigstens einen Eintritt auf, über welchen das unter Druck stehende Gas in die Vorrichtung einleitbar ist. Die Vorrichtung umfasst ferner wenigstens einen Gegenstrom-Wärmetauscher, welcher wenigstens einen über den Eintritt mit dem unter Druck stehenden Gas versorgbaren und in eine erste Richtung von dem Gas durchströmbaren ersten Kanal aufweist. Die Vorrichtung weist ferner wenigstens eine Expansionsdüse auf, in welche der erste Kanal mündet. Dadurch ist das von dem ersten Kanal in die Expansionsdüse strömende, die Expansionsdüse durchströmende und aus der Expansionsdüse ausströmende Gas mittels der Expansionsdüse unter Bildung eines eine gasförmige Phase und flüssige Tropfen umfassenden Aerosols expandierbar. Mit anderen Worten wird während eines Betriebs der Vorrichtung das die Expansionsdüse durchströmende und aus der Expansionsdüse ausströmende Gas mittels der Expansionsdüse expandiert, wodurch unterhalb einer gasspezfischen Temperatur aus dem Gas ein auch als Nebel bezeichnetes Aerosol gebildet wird. Das Aerosol umfasst eine gasförmige Phase und flüssige Tropfen, wobei sowohl die gasförmige Phase als auch die flüssigen Tropfen aus dem aus der Expansionsdüse ausströmenden Gas gebildet werden. Die gasförmige Phase ist somit zumindest ein Teil des die Expansionsdüse durchströmenden und aus der Expansionsdüse ausströmenden Gases, wobei dieser Teil nicht in Flüssigkeit beziehungsweise Tröpfchen umgewandelt wird, sondern gasförmig verbleibt.

Die Vorrichtung umfasst darüber hinaus einen Aerosolbrecher, mittels welchem zumindest ein Teil der Tropfen von der gasförmigen Phase abscheidbar ist. Im Rahmen dieses Abscheidens setzt sich beispielsweise zumindest der Teil der Tropfen an dem Aerosolbrecher ab beziehungsweise schlägt sich an dem Aerosolbrecher nieder, wodurch dieser Teil aus dem Aerosol abgeschieden wird.

Die Vorrichtung umfasst dabei darüber hinaus einen Sammelbereich zum Auffangen und Sammeln der von dem Aerosolbrecher abtropfenden Tropfen. Die von dem Aerosolbrecher abtropfenden Tropfen können sich somit in dem Sammelbereich sammeln und beispielsweise die zuvor genannte Flüssigkeit bilden.

Der Gegenstrom-Wärmetauscher umfasst darüber hinaus einen den ersten Kanal umgebenden zweiten Kanal, welcher in eine der ersten Richtung entgegengesetzte zweite Richtung von der gegenüber dem Gas entspannten und kälteren und aus der Expansionsdüse ausströmenden gasförmigen Phase durchströmbar ist und den ersten Kanal umgibt. Mit anderen Worten ist das Gas, welches nicht mittels der Expansionsdüse in flüssige Tropfen umgewandelt wird, gegenüber dem noch nicht aus der Expansionsdüse ausgeströmten und beispielsweise den ersten Kanal durchströmenden Gas expandiert und kälter, sodass beispielsweise über jeweilige, die Kanäle jeweils zumindest teilweise begrenzende beziehungsweise bildende Wandungsbereiche des Gegenstrom-Wärmetauschers ein Wärmeübergang von dem den ersten Kanal durchströmenden Gas an die den zweiten Kanal durchströmende gasförmige Phase erfolgt beziehungsweise erfolgen kann. Dadurch wird das den ersten Kanal durchströmende Gas gekühlt und die den zweiten Kanal durchströmende gasförmige Phase beziehungsweise das den zweiten Kanal durchströmende Gas wird erwärmt. Auf diese Weise kann das den ersten Kanal durchströmende Gas auf seinem Weg zu der Expansionsdüse besonders effizient und effektiv gekühlt werden.

Des Weiteren ist es erfindungsgemäß vorgesehen, dass die Vorrichtung einstückig ausgebildet ist. Dies bedeutet, dass der Eintritt, der Gegenstrom-Wärmetauscher, die Expansionsdüse, der Aerosolbrecher und der Sammelbereich beziehungsweise jeweilige, den Eintritt, den Gegenstrom-Wärmetauscher, die Expansionsdüse, den Aerosolbrecher und den Sammelbereich bildende beziehungsweise begrenzende Wandungsbereiche einstückig miteinander ausgebildet sind, sodass die Vorrichtung als Monolith ausgebildet ist. Hierdurch können sowohl die Kosten als auch die Teileanzahl, das Gewicht und der Bauraumbedarf der Vorrichtung in einem besonders geringen Rahmen gehalten werden, sodass sich beispielsweise die erfindungsgemäße Vorrichtung besonders vorteilhaft zur dezentralen Speicherung, insbesondere Zwischenspeicherung, von überschüssiger elektrischer Energie nutzen lässt. Insbesondere kann mithilfe der Vorrichtung überschüssige elektrische Energie dezentral genutzt werden, um mithilfe der Vorrichtung und mithilfe der überschüssigen elektrischen Energie aus dem wenigstens einen Gas die flüssigen und auch als Tröpfchen bezeichneten Tropfen und somit die Flüssigkeit zu bilden. Hierdurch kann in der beispielsweise als Tiefkalt-Flüssiggas ausgebildeten Flüssigkeit zumindest ein Teil der überschüssigen elektrischen Energie effizient und effektiv gespeichert werden. Durch den geringen Raumbedarf kann auch dezentral eine geringe Menge von tiefkaltem Flüssiggas aus nur komprimiertem Gas hergestellt werden, so dass eine Kühlung von Bauteilen auf niedrige Temperatur kontinuierlich durchgeführt werden kann nur aus komprimiertem Gas.

Das wenigstens eine Gas ist beispielsweise ein Arbeitsmedium, wobei die Vorrichtung auf besonders einfache Weise an unterschiedliche Arbeitsmedien angepasst werden kann. Mögliche Arbeitsmedien sind beispielsweise Luft, insbesondere Trockenluft, sowie Stickstoff (N₂), Sauerstoff (O₂), Argon (Ar), Krypton (Kr), Xenon (Xe), Neon (Ne), Methan (CH₄), Ammoniak (NH₃) , Ethan (C₂H₆), Äthylen (C₂H₄), Propan (CH₃CH₂CH₃), Propen (CH₂CHCH₃), Kohlendioxid, insbesondere unter Druck stehendes Kohlendioxid (CO₂), sowie andere Gase. Besonders bevorzugt kann Druckluft von Molekülen befreit werden, welche bei den niedrigen Temperaturen der flüssigen Luft erstarren und dadurch Kanäle verstopfen könnten. Dies kann durch geeignete Filter wie sogenannte Molekularsiebe erfolgen, welche verschiedene absorbierbare Moleküle aus der Druckluft entfernen, wie beispielsweise kurzkettige Kohlenwasserstoffe wie Methan (CH4), Ethan (C2H6), Äthylen (C2H4), Propan (C3H8), Propen (C3H6), Butan (C4H10), Buten (C4H8), Butadien (C4H6), Distickstoffoxid (N2O, Lachgas), Kohlendioxid (CO2) oder Wasserdampf (H2O).

Durch die einstückige Ausgestaltung der Vorrichtung ist eine Bauform geschaffen, in welche alle zum Verflüssigen des Gases erforderlichen Funktionsteile integriert sind. In der Folge ist es zum Verflüssigen des wenigstens einen Gases lediglich noch erforderlich, eine beispielsweise das wenigstens eine Gas als Druckgas bereitstellende Gasquelle an den Eintritt beziehungsweise über den Eintritt an die Vorrichtung anzuschließen. Ferner ist gegebenenfalls eine Ableitung des verbliebenen und entspannten und die gasförmige Phase bildenden Gases vorgesehen, sodass beispielsweise die Vorrichtung einen Austritt aufweisen kann, über welchen die gasförmige Phase aus dem zweiten Kanal beziehungsweise aus der Vorrichtung ausleitbar ist.

Dabei ist es denkbar, die gasförmige Phase, insbesondere über den Austritt, einem Kreislauf beziehungsweise einem Verdichter zuzuführen, welcher beispielsweise die gasförmige Phase verdichten kann. Dadurch kann der Verdichter beispielsweise die gasförmige Phase in das wenigstens eine Gas insbesondere in Form von Druckgas umwandeln, sodass dann die gasförmige Phase als Druckgas beziehungsweise als das wenigstens eine Gas wieder über den Eintritt der Vorrichtung und insbesondere den ersten Kanal zugeführt werden kann. Durch die einstückige Ausgestaltung kann ferner eine besonders hohe Stabilität der Vorrichtung gegenüber hohen Drücken gewährleistet werden. Außerdem sind keine Fügevorgänge, Verschraubungen, vorgefertigte Teile, Verschweißungen etc. vorgesehen oder erforderlich, da die Vorrichtung einstückig ausgebildet ist. Die Vorrichtung, insbesondere deren Ausgestaltung, ist parametrisiert anpassbar auf unterschiedliche Gase und deren jeweilige Menge. Insbesondere kann eine Bündelung von Bauteilen in einem generativen Fertigungsprozess, beispielsweise in einer nach PBF-Methoden aufbaubaren Geometrie für das Strahlschmelzen im Pulverbett (Powder Bed Fusion) ohne Stützstrukturen im Inneren realisiert werden.

Mithilfe der erfindungsgemäßen Vorrichtung ist es möglich, kleine, dezentral nutzbare Anlagen zum Verflüssigen von Gasen zu realisieren und solche Anlagen besonders wirtschaftlich betreiben zu können. Durch den monolithischen Aufbau kann ferner eine Kapselung der Kälte der Flüssigkeit realisiert werden, sodass ein besonders effizienter Betrieb darstellbar ist. Außerdem kann eine manuelle Fertigung der Vorrichtung vermieden werden. Mit anderen Worten kann eine automatische, insbesondere voll-automatische, Fertigung der Vorrichtung realisiert werden, insbesondere auch dann, wenn diese eine komplexe Geometrie aufweist. Dadurch kann die Vorrichtung zeit- und kostengünstig hergestellt werden.

Als besonders vorteilhaft hat es sich gezeigt, wenn die Vorrichtung eine Isolation mit wenigstens einen den Gegenstrom-Wärmetauscher außenumfangsseitig zumindest überwiegend, insbesondere vollständig, umgebenden Isolationsmantel aufweist, welcher evakuiert ist. Die Isolation ist somit als Vakuum-Isolation ausgebildet, da beispielsweise durch das Evakuieren des Isolationsmantels in dem Isolationsmantel ein solches Vakuum herrscht, welches durch technisch verfügbare Mittel erzeugbar ist. Unter dem im Isolationsmantel herrschenden Vakuum beziehungsweise unter dem Evakuieren des Isolationsmantels ist somit insbesondere zu verstehen, dass in dem Isolationsmantel ein Druck herrscht, welcher wesentlich geringer als ein in der Umgebung der Vorrichtung herrschender weiterer Druck ist. Durch eine solche Vakuum-Isolierung kann ein übermäßiger Kälteverlust beziehungsweise ein übermäßiger Wärmeeintrag in den Speicherbereich vermieden werden, sodass die insbesondere als Tiefkalt-Flüssiggas ausgebildete Flüssigkeit in dem Speicherbereich besonders vorteilhaft aufgenommen und gespeichert werden kann.

Vorzugsweise weist die Vorrichtung einen Abführanschluss auf, über welchen die Tropfen beziehungsweise die Flüssigkeit aus dem Sammelbereich an die Umgebung der Vorrichtung abführbar ist.

Eine weitere Ausführungsform zeichnet sich dadurch aus, dass die Vorrichtung durch ein generatives Fertigungsverfahren, insbesondere durch 3D-Drucken, hergestellt ist. Insbesondere ist die Vorrichtung durch ein Pulverbett-Schmelzverfahren (Powder Bed Fusion, PBF) gebildet. Durch ein solches generatives Fertigungsverfahren kann die Vorrichtung ohne innere Stützstrukturen nur auf sich selbst tragend aufgebaut werden. Ferner kann die Vorrichtung zeit- und kostengünstig sowie mit einer hohen Stabilität und Druckfestigkeit hergestellt werden.

Um den Bauraumbedarf der Vorrichtung besonders gering halten sowie eine besonders große Länge des jeweiligen Kanals realisieren zu können, ist es in weiterer Ausgestaltung der Erfindung vorgesehen, dass die Kanäle insbesondere um eine Längserstreckungsrichtung der Vorrichtung, zumindest im Wesentlichen spiralförmig beziehungsweise helixförmig verlaufen.

Dadurch kann das den ersten Kanal durchströmende Gas besonders bauraumgünstig und besonders effizient gekühlt werden.

In weiterer Ausgestaltung der Erfindung weisen die Kanäle mindestens einen ersten Kanalabschnitt und bevorzugt einen zweiten Kanalabschnitt auf, wobei der zweite Kanalabschnitt in Strömungsrichtung des den jeweiligen Kanal durchströmenden Gases stromab des ersten Kanalabschnitts angeordnet ist und wobei die Kanalabschnitte beispielsweise fluidisch miteinander verbunden sind. Dabei ist der zweite Kanalabschnitt auf einer dem Sammelbereich zugewandten Innenseite des ersten Kanalabschnitts angeordnet. Durch den Einsatz der Kanalabschnitte können besonders große Längen der Kanäle auf bauraumgünstige Weise realisiert werden, sodass insbesondere der in Längserstreckungsrichtung der Vorrichtung erstreckende Bauraumbedarf der Vorrichtung in einem besonders geringen Rahmen gehalten werden kann. Außerdem kann dadurch das den ersten Kanal durchströmende Gas effektiv und effizient gekühlt werden. Besonders bevorzugt kann ein dritter und vierter Kanalabschnitt ergänzt werden.

Um eine besonders vorteilhafte Kühlung des den ersten Kanal durchströmenden Gases realisieren zu können, ist es in weiterer Ausgestaltung der Erfindung vorgesehen, dass die Kanäle eine Länge von wenigstens 10 Metern, bevorzugt von wenigstens 20 Metern, insbesondere von wenigstens oder genau 21 Metern, aufweisen.

Eine weitere Ausführungsform zeichnet sich dadurch aus, dass der Aerosolbrecher eine Mehrzahl von an sich beziehungsweise für sich betrachtet trichterförmigen, aufeinander angeordneten Schichten mit jeweiligen, in Umfangsrichtung des Aerosolbrechers voneinander beabstandeten Brecherplatten aufweist. Unter dem Merkmal, dass die jeweilige Schicht zumindest im Wesentlichen trichterförmig ausgebildet ist, ist insbesondere zu verstehen, dass beispielsweise eine jeweilige, die jeweilige Schicht einhüllende beziehungsweise umgebende Hüllkurve zumindest im Wesentlichen trichterförmig ist, wobei die jeweiligen Brecherplatten der jeweiligen Schicht in der jeweiligen Hüllkurve der jeweiligen Schicht, insbesondere vollständig, angeordnet beziehungsweise aufgenommen sind. Dabei ist der Aerosolbrecher nach Art einer Blüte einer Blume ausgebildet, wobei die Brecherplatten beispielsweise jeweilige Blütenblätter der Blüte darstellen. Durch die Schichten und die Brecherplatten wird beispielsweise das Aerosol auf seinem Weg von der Expansionsdüse beispielsweise zu wenigstens einer Einströmöffnung, über welche das Aerosol beziehungsweise dessen gasförmige Phase in den zweiten Kanal einströmen kann, mittels des Aerosolbrechers mehrmals umgelenkt beziehungsweise umgeleitet, sodass eine Vielzahl von Richtungswechseln des Aerosols bewirkt wird. Auf diese Weise können beispielsweise die in dem Aerosol aufgenommenen Tropfen nach Art einer Labyrinthdichtung aus der gasförmigen Phase abgeschieden werden, sodass die gasförmige Phase keine flüssigen Tropfen oder eine nur geringe Anzahl an flüssigen Tropfen mitreißt und über die Einströmöffnung in den zweiten Kanal transportiert. Mittels des Aerosolbrechers können die flüssigen Tropfen aus dem Aerosol derart abgeschieden werden, dass sich die flüssigen Tropfen des Aerosols aufgrund der häufigen Richtungsänderungen an den Brecherplatten niederschlagen und in der Folge von den Brecherplatten abströmen und sich in dem Sammelbereich sammeln können. In der Folge bilden die Tropfen die tiefkalte Flüssigkeit, welche aus dem Gas erzeugt wird.

Um die Tropfen des Aerosols besonders effektiv und effizient von der gasförmigen Phase abscheiden zu können, ist es in weiterer Ausgestaltung der Erfindung vorgesehen, dass die Expansionsdüse in einen durch den Aerosolbrecher begrenzten Bereich mündet. Mit anderen Worten mündet die Expansionsdüse in ein Inneres des Aerosolbrechers, dessen Inneres beispielsweise nach außen hin durch die Brecherplatten begrenzt ist.

Bei einer besonders vorteilhaften Ausführungsform der Erfindung weist die Expansionsdüse einen durch eine innenumfangsseitige Mantelfläche eines ersten Düsenkörpers der Expansionsdüse begrenzten Düsenkanal auf, in welchem ein zweiter Düsenkörper angeordnet ist. Der zweite Düsenkörper ist über Stege an der innenumfangsseitigen Mantelfläche und somit an dem ersten Düsenkörper gehalten und von der innenumfangsseitigen Mantelfläche beabstandet, wobei die Stege beispielsweise in Umfangsrichtung des zweiten Düsenkörpers voneinander beabstandet sind. Dadurch kann beispielsweise das den Düsenkanal durchströmende Gas zwischen der innenumfangsseitigen Mantelfläche und dem zweiten Düsenkörper, insbesondere einer außenumfangsseitigen Mantelfläche des zweiten Düsenkörpers, hindurchströmen. Ferner begrenzen die innenumfangsseitige Mantelfläche und der zweite Düsenkörper, insbesondere dessen außenumfangsseitige Mantelfläche, einen sich in Strömungsrichtung des den Düsenkanal durchströmenden Gases verjüngenden Düsenquerschnitt, wodurch das Gas besonders effektiv und effizient sowie insbesondere adiabat mittels der Expansionsdüse entspannt werden kann.

Der Sammelbereich ist nach außen hin zumindest teilweise, insbesondere zumindest überwiegend, von dem Gegenstrom-Wärmetauscher umgeben, sodass der Sammelbereich beispielsweise nicht nur mittels der vorzugsweise vorgesehenen Isolation, sondern insbesondere von dem zu kühlenden Gas und/oder der kalten gasförmigen Phase umgeben und somit mittels des zu kühlenden Gases beziehungsweise mittels der gasförmigen Phase isoliert wird.

Schließlich hat es sich als besonders vorteilhaft gezeigt, wenn die Vorrichtung aus einem metallischen Werkstoff gebildet ist. Hierdurch können eine besonders hohe Stabilität und Festigkeit, insbesondere Druckfestigkeit, der Vorrichtung realisiert werden. Außerdem kann das wenigstens eine Gas besonders effizient und effektiv verflüssigt werden, und es kann eine vorteilhafte Isolation, insbesondere des Sammelbereichs, dargestellt werden.

Ein zweiter Aspekt der Erfindung betrifft eine Anlage zum Verflüssigen wenigstens eines Gases, wobei die Anlage wenigstens eine erfindungsgemäße Vorrichtung gemäß dem ersten Aspekt der Erfindung aufweist. Vorteile und vorteilhafte Ausgestaltungen der erfindungsgemäßen Anlage sind als Vorteile und vorteilhafte Ausgestaltungen der erfindungsgemäßen Vorrichtung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische Darstellung einer Anlage zum Verflüssigen wenigstens eines Gases;
- FIG 2: eine schematische Perspektivansicht einer erfindungsgemäßen Vorrichtung der Anlage;
- FIG 3: eine schematische Längsschnittansicht der Vorrichtung;
- FIG 4: eine schematische und perspektivische Querschnittsansicht der Vorrichtung;
- FIG 5: ausschnittsweise eine schematische Längsschnittansicht der Vorrichtung;
- FIG 6: eine schematische und perspektivische Unteransicht der Vorrichtung;
- FIG 7: eine schematische und perspektivische Querschnittsansicht der Vorrichtung;
- FIG 8: eine weitere schematische und perspektivische Querschnittsansicht der Vorrichtung;
- FIG 9: eine weitere schematische und perspektivische Querschnittsansicht der Vorrichtung;
- FIG 10: eine weitere schematische und perspektivische Querschnittsansicht der Vorrichtung;
- FIG 11: ausschnittsweise eine weitere schematische Längsschnittansicht der Vorrichtung;
- FIG 12: ausschnittsweise eine weitere schematische Längsschnittansicht der Vorrichtung;
- FIG 13: ausschnittsweise eine weitere schematische Längsschnittansicht der Vorrichtung;
- FIG 14: ausschnittsweise eine weitere schematische Längsschnittansicht der Vorrichtung; und
- FIG 15: ausschnittsweise eine weitere schematische Längsschnittansicht der Vorrichtung.

In den FIG sind gleiche oder funktionsgleiche Elemente mit gleichen Bezugszeichen versehen.

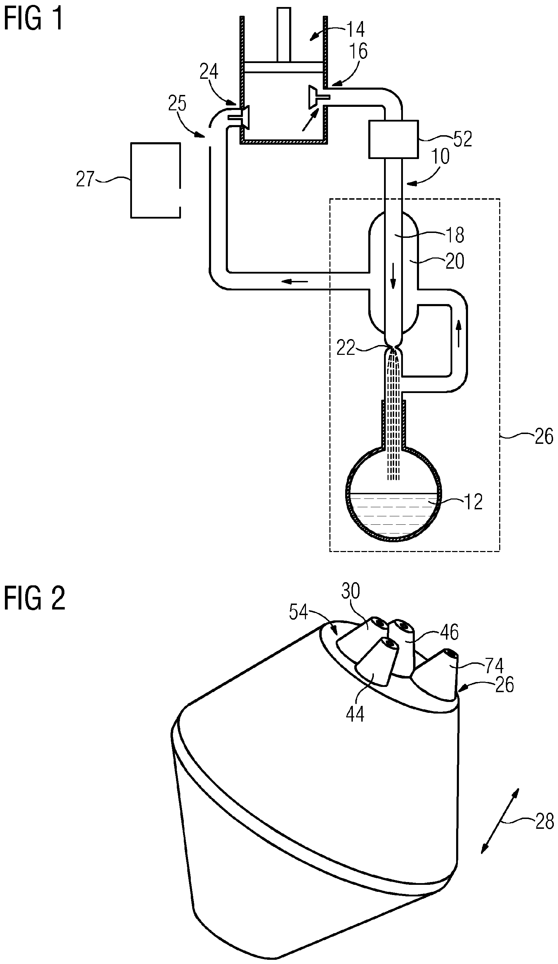

FIG 1 zeigt in einer schematischen Darstellung eine Anlage 10 zum Verflüssigen wenigstens eines Gases. Unter dem Verflüssigen des Gases ist zu verstehen, dass aus dem Gas eine Flüssigkeit 12 gebildet beziehungsweise hergestellt wird. Mit anderen Worten wird zumindest aus einem ersten Teil des Gases die Flüssigkeit 12 gebildet, welche beispielsweise als Tiefkalt-Flüssiggas ausgebildet ist. Beispielsweise kann vorgesehen sein, dass ein von dem ersten Teil unterschiedlicher zweiter Teil des Gases zwar expandiert und gekühlt, nicht jedoch in Flüssigkeit umgewandelt wird, sondern gasförmig verbleibt.

Die Anlage 10 umfasst beispielsweise einen Verdichter 14, mittels welchem das wenigstens eine Gas verdichtet werden kann beziehungsweise verdichtet wird. Der Verdichter 14 stellt somit das wenigstens eine Gas als Druckgas bereit. Anstelle des Verdichters kann auch ein Druckgasspeicher als Gasquelle dienen.

Das Druckgas wird - wie in FIG 1 durch Pfeile veranschaulicht ist - über ein Austrittsventil 16 in ein Kanalsystem 18 eingeleitet, welches durch eine Wärmetauschereinrichtung 20 hindurch verläuft. Mittels des Kanalsystems 18 wird das Gas als Druckgas einem Expansionsventil 22 zugeführt, mittels welchem das Gas expandiert und dadurch gekühlt wird. Hierdurch wird zumindest aus dem ersten Teil des Gases die Flüssigkeit 12 hergestellt, welche beispielsweise flüssige Luft ist. Beispielsweise der zweite Teil, welcher gasförmig verbleibt, wird der Wärmetauschereinrichtung 20 zugeführt und umströmt das Kanalsystem 18 in der Wärmetauschereinrichtung 20, sodass das das Kanalsystem 18 durchströmende Gas mittels des expandierten und gekühlten zweiten Teils gekühlt wird. Der zweite Teil wird beispielsweise über ein Eintrittsventil 24 dem Verdichter 14 wieder zugeführt, sodass aus dem zweiten Teil mittels des Verdichters 14 beispielsweise das Gas als das Druckgas gebildet wird, welches über das Eintrittsventil 24 wieder dem Kanalsystem 18 zugeführt werden kann beziehungsweise zugeführt wird.

Stromab des Verdichters 14 und stromauf der Wärmetauschereinrichtung 20 ist eine Absorbereinrichtung 52 mit zwei wechselseitig schaltbaren Absorbern zum Trocknen des Gases vorgesehen, was auch als Lead/Lag-Schaltung bezeichnet wird.

Das Gas, welches dem Verdichter 14 zugeführt und mittels des Verdichters 14 verdichtet wird, stammt beispielsweise aus der Umgebung beziehungsweise aus der Atmosphäre und wird beispielsweise über einen Gaseingang 25 dem Verdichter 14 zugeführt. Ferner ist es denkbar, dass das in einem Gasreservoir 27 gespeichert ist beziehungsweise wird und von dem Gasreservoir 27 bereitgestellt wird. Das Gas kann dann aus dem Gasreservoir 27 ausströmen und über den Gaseingang 25 und beispielsweise dem Eintrittsventil 24 dem Verdichter 14 zugeführt werden.

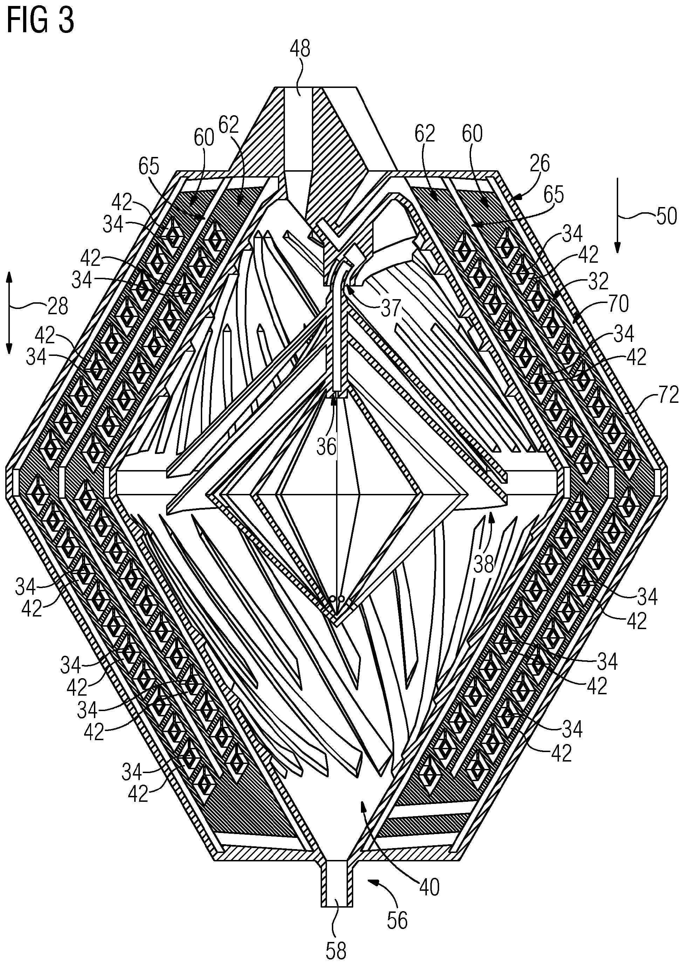

Um nun die Flüssigkeit 12 besonders effizient und effektiv sowie bauraum- und kostengünstig herstellen zu können, umfasst die Anlage 10 eine besonders gut aus FIG 2 bis 15 erkennbare Vorrichtung 26. Die Vorrichtung 26 ist in FIG 2 in einer schematischen Perspektivansicht und in FIG 3 in einer schematischen Längsschnittansicht dargestellt. Besonders gut aus FIG 3 ist erkennbar, dass die Vorrichtung 26 eine durch einen Doppelpfeil 28 veranschaulichte Längserstreckungsrichtung aufweist, welche beispielsweise auch als z-Richtung bezeichnet wird.

Besonders gut aus FIG 2 und 3 ist erkennbar, dass die Vorrichtung 26 wenigstens einen auch als Druckgaseintritt bezeichneten Eintritt 30 aufweist, über welchen das wenigstens eine, unter Druck stehende, Gas, das heißt das Druckgas, beispielsweise über das Eintrittsventil 24 in die Vorrichtung 26 einleitbar ist. Mit anderen Worten wird während eines Verfahrens zum Verflüssigen des wenigstens einen Gases das unter Druck stehende Gas als Druckgas über den Eintritt 30 in die Vorrichtung 26 eingeleitet.

Besonders gut aus FIG 3 ist erkennbar, dass die Vorrichtung 10 einen Gegenstrom-Wärmetauscher 32 aufweist, welcher beispielsweise die Wärmetauschereinrichtung 20 ist beziehungsweise als die Wärmetauschereinrichtung 20 verwendet wird. Der Gegenstrom-Wärmetauscher 32 weist dabei wenigstens einen über den Eintritt 30 mit dem unter Druck stehenden Gas versorgbaren und in eine erste Richtung von dem Gas durchströmbaren ersten Kanal 34 auf, von welchem dadurch, dass die Vorrichtung 26 in FIG 3 in einer schematischen Längsschnittansicht gezeigt ist, in FIG 3 jeweilige Teile des Kanals 34 erkennbar sind. Der Kanal 34 erstreckt sich dabei um die Längserstreckungsrichtung zumindest im Wesentlichen spiralförmig, sodass beispielsweise das Gas auf seinem Weg durch den Kanal 34 zumindest im Wesentlichen spiralförmig strömt.

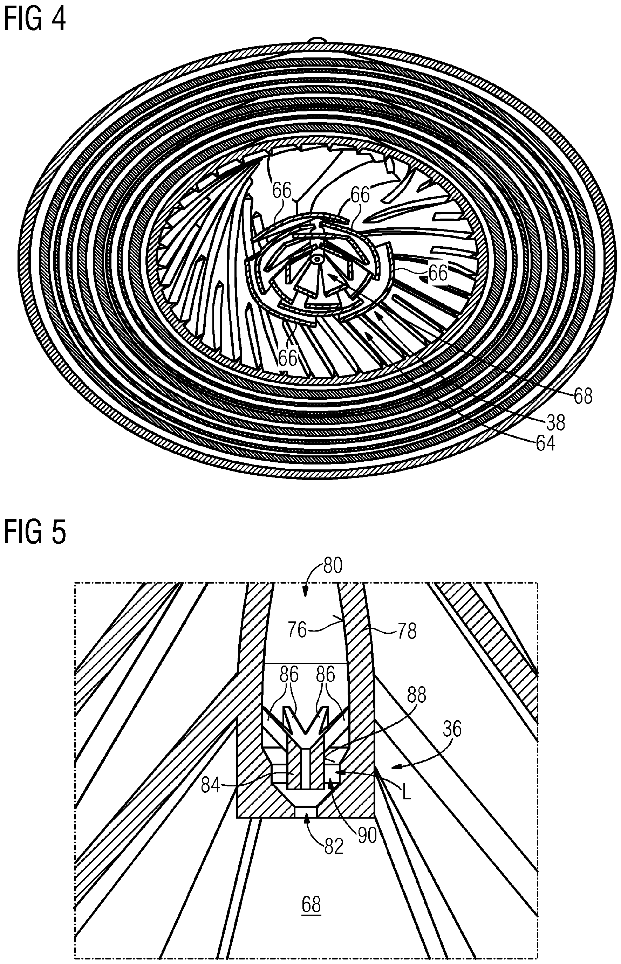

Die Vorrichtung 26 weist darüber hinaus wenigstens eine besonders gut aus FIG 5 erkennbare Expansionsdüse 36 auf, in welche der erste Kanal 34 mündet. Dadurch wird das von dem ersten Kanal 34 in die Expansionsdüse 36 strömende, die Expansionsdüse 36 durchströmende und aus der Expansionsdüse 36 ausströmende unter Druck stehende Gas mittels der Expansionsdüse 36 expandiert, wobei bei ausreichender Abkühlung des Gases in Kanal 34 die Expansion unter Bildung eines Aerosols erfolgen kann, welches eine aus dem Gas gebildete kältere gasförmige Phase und flüssige Tropfen beziehungsweise Tröpfchen umfasst. Mittels der Expansionsdüse 36 wird das Gas expandiert und, insbesondere adiabat, gekühlt, wodurch beispielsweise zumindest der zuvor genannte erste Teil kondensiert beziehungsweise verflüssigt wird und somit die flüssigen Tropfen bildet. Die gasförmige Phase des Aerosols wird durch das expandierte und dadurch gekühlte Gas an sich, das heißt durch den zuvor genannten zweiten Teil, gebildet, wobei die gasförmige Phase beziehungsweise das Gas, welches nicht in Flüssigkeit umgewandelt wurde, gegenüber dem den Kanal 34 durchströmenden Gas kälter und expandiert ist. Die Expansionsdüse 36 fungiert somit als das Expansionsventil 22.

Die gasförmige Phase strömt in Richtung einer für das expandierte Gas vorgesehenen Eintrittsöffnung 37 des Wärmetauschers 32 und reißt auf diesem Weg beispielsweise die flüssigen Tröpfchen mit. Um jedoch aus den flüssigen Tröpfchen die gewünschte Flüssigkeit 12 zu bilden, umfasst die Vorrichtung 26 einen Aerosolbrecher 38, mittels welchem zumindest ein Teil der Tropfen von der gasförmigen Phase des Aerosols abscheidbar ist beziehungsweise abgeschieden wird. Der Aerosolbrecher 38 bewirkt eine Vielzahl von Richtungsänderungen und somit Strömungsumlenkungen des Aerosols, wodurch sich beispielsweise zumindest ein Teil der Tropfen an dem Aerosolbrecher 38 niederschlägt. Die Tropfen können dann beispielsweise von dem Aerosolbrecher 38 abtropfen und sich in einem Sammelbereich 40 sammeln. Somit weist die Vorrichtung 26 darüber hinaus den Sammelbereich 40 zum Auffangen und Sammeln der von dem Aerosolbrecher 38 abtropfenden Tropfen auf.

Der Gegenstrom-Wärmetauscher 32 weist darüber hinaus wenigstens einen den ersten Kanal 34 umgebenden zweiten Kanal 42 auf. Auch von dem Kanal 42 sind in FIG 3 jeweilige Teile erkennbar, wobei der zweite Kanal 42 beispielsweise fluidisch mit dem Sammelbereich 40 verbunden ist. Insbesondere weist der zweite Kanal 42 wenigstens eine Einströmöffnung für das expandierte Gas auf, über welche der zweite Kanal 42 fluidisch mit dem Sammelbereich 40 verbunden ist. Diese wenigstens eine Einströmöffnung ist beispielsweise die zuvor genannte Eintrittsöffnung 37, über welche die gasförmige Phase in den zweiten Kanal 42 und somit in den Gegenstrom-Wärmetauscher 32 einströmen kann. Das Aerosol beziehungsweise die gasförmige Phase strömt aus dem Sammelbereich 40 zu der Eintrittsöffnung 37 und insbesondere in die Eintrittsöffnung 37, sodass die gasförmige Phase über die Eintrittsöffnung 37 in den zweiten Kanal 42 einströmt. Mittels des Aerosolbrechers 38 wird dabei verhindert, dass die gasförmige Phase eine übermäßige Menge beziehungsweise Anzahl an Tropfen mitreißt und in den zweiten Kanal 42 transportiert. Auch der zweite Kanal 42 erstreckt sich um die Längserstreckungsrichtung zumindest im Wesentlichen spiralförmig, sodass die den zweiten Kanal 42 durchströmende gasförmige Phase zumindest im Wesentlichen spiralförmig strömt. Da sich der jeweilige Kanal 34 beziehungsweise 42 zumindest im Wesentlichen spiralförmig erstreckt, weist der jeweilige Kanal 34 beziehungsweise 42 jeweilige, sich um die Längserstreckungsrichtung herum erstreckende Windungen auf. Unter dem Merkmal, dass der zweite Kanal 42 den ersten Kanal 34 insbesondere in dessen Umfangsrichtung vollständig umlaufend umgibt, ist insbesondere zu verstehen, dass die jeweiligen Windungen des Kanals 34 in den jeweiligen Windungen des Kanals 42 verlaufen, sodass beispielsweise der zweite Kanal 42 wenigstens eine oder mehrere erste Spiralen bildet. Ferner bildet der erste Kanal 34 wenigstens eine oder mehrere zweite Spiralen, wobei beispielsweise die jeweilige zweite Spirale in der jeweiligen ersten Spirale verläuft. Das den zweiten Kanal 42 durchströmende Gas, welches die gasförmige Phase bildet, umströmt somit außenseitig jeweilige Wandungen oder Wandungsbereiche direkt, welche innenseitig den Kanal 34 bilden beziehungsweise begrenzen. Dies bedeutet, dass die gegenüber den Kanal 34 durchströmende Gas kältere gasförmige Phase die genannten Wandungen direkt berührt, sodass ein effizienter und effektiver Wärmeübergang von dem den Kanal 34 wärmeren durchströmenden Gas über die Wandungen an die den Kanal 42 durchströmende kältere gasförmige Phase erfolgen kann. Hierdurch wird das den Kanal 34 durchströmende Gas gekühlt, und die den Kanal 42 durchströmende gasförmige Phase wird erwärmt. Da das Gas in die erste Richtung und die gasförmige Phase in die entgegengesetzte zweite Richtung strömt, ist die Wärmetauschereinrichtung 20 als der effektive und effiziente Gegenstrom-Wärmetauscher 32 ausgebildet. Da die Wäremtauscherstruktur 32 mit nur wenig Verbindugnsstellen zur Innen- und Außenwand aufgehängt ist, findet trotz der kleinen und kompakten Bauform ein sehr guter Wärmetransfer statt.

Des Weiteren ist die Vorrichtung 26 als Monolith und somit einstückig ausgebildet. Hierdurch können die Teileanzahl und somit die Kosten, der Bauraumbedarf und das Gewicht der Vorrichtung 26 in einem besonders geringen Rahmen gehalten werden. Ferner können auch keine Leckagen oder Risse an Fügestellen auftreten, da durch die monolithische Bauweise die Zahl der Verbindungsstellen auf ein Minimum von maximal nur 5 Anschlüssen reduziert ist.

Aus FIG 2 ist erkennbar, dass die Vorrichtung 26 wenigstens einen auch als Entspannungsgasaustritt bezeichneten Austritt 44 aufweist, über welchen beispielsweise die gasförmige Phase aus dem zweiten Kanal 42 ausleitbar ist. Da die gasförmige Phase gegenüber dem den Kanal 34 durchströmenden Gas expandiert und somit entspannt ist, wird die gasförmige Phase auch als Entspannungsgas bezeichnet. Das Entspannungsgas kann beispielsweise über den Austritt 44 aus der Vorrichtung 26 abgeführt werden. Beispielsweise wird das Entspannungsgas über das Eintrittsventil 24 wieder dem Verdichter 14 zugeführt, sodass beispielsweise das Entspannungsgas als der zuvor genannte zweite Teil mittels des Verdichters 14 wieder verdichtet werden kann.

Die Vorrichtung 26 kann ferner einen Berstventilanschluss 46 aufweisen, an welchem beispielsweise ein Berstventil anschließbar ist. Der Berstventilanschluss 46 weist einen aus FIG 3 erkennbaren Berstkanal 48 auf, welcher fluidisch mit dem Sammelbereich 40 verbunden ist. Übersteigt beispielsweise ein in dem Sammelbereich 40 herrschender Druck einen vorgebbaren Schwellenwert, so öffnet, insbesondere birst, das Berstventil, wodurch das Berstventil beispielsweise den Berstkanal 48 freigibt. In der Folge kann beispielsweise ein in dem Sammelbereich 40 aufgenommenes Fluid über den Berstkanal 48 aus dem Sammelbereich 40 abgeführt werden, sodass ein übermäßiger Druckanstieg in dem Sammelbereich 40 vermieden werden kann.

Um die Vorrichtung 26 besonders zeit- und kostengünstig herzustellen, ist die Vorrichtung 26 vorzugsweise durch ein generatives Fertigungsverfahren, insbesondere durch 3D-Drucken, hergestellt. FIG 3 zeigt beispielsweise die Vorrichtung 26 in ihrer Einbaulage, wobei in FIG 3 durch einen Pfeil 50 eine sogenannte, mit der Längserstreckungsrichtung der Vorrichtung 26 zusammenfallende Funktionsrichtung veranschaulicht ist. Bezogen auf die Einbaulage wirkt die Schwerkraft in die Funktionsrichtung, da beispielsweise die mittels des Aerosolbrechers 38 abgeschiedenen Tropfen entlang der Funktionsrichtung von dem Aerosolbrecher 38 abtropfen und sich in dem Sammelbereich 40 sammeln. Ferner veranschaulicht in FIG 3 der Pfeil 50 eine mit der Längserstreckungsrichtung zusammenfallende Baurichtung, entlang welcher die Vorrichtung 26 durch das generative Fertigungsverfahren aufgebaut beziehungsweise hergestellt wird. Der Aufbau der Vorrichtung 26 startet am Fuß des Pfeiles 50 und wächst in Richtung der Spitze des Pfeiles 50. Durch die monolithische Ausgestaltung der Vorrichtung 26 kann dabei deren gewünschte Funktion hinsichtlich der Verflüssigung des wenigstens einen Gases realisiert werden, wobei die Einbaulage in Funktionsrichtung der Lage in Baurichtung entgegengesetzt ist beziehungsweise umgekehrt.

In fertig hergestelltem Zustand ist beispielsweise die Vorrichtung 26 in etwa so groß wie ein Football, welcher als Spielgerät beziehungsweise Sportgerät in der Sportart American Football genutzt wird. Die Vorrichtung 26 ermöglicht somit eine dezentrale, effiziente und effektive Verflüssigung von Gasen, wodurch beispielsweise in dem flüssigen Gas beziehungsweise der Flüssigkeit 12 überschüssige elektrische Energie gespeichert, insbesondere zwischengespeichert, werden kann.

Der Eintritt 30 umfasst beispielsweise einen Eintrittsanschluss 54 der Vorrichtung 26, sodass beispielsweise an den Eintrittsanschluss 54 eine Leitung zum Führen des Druckgases angeschlossen werden kann. Somit kann beispielsweise das die Leitung durchströmende Druckgas aus der Leitung aus- und in den Eintrittsanschluss 54 einströmen und über den Eintrittsanschluss 54 in den Kanal 34 einströmen.

Die Vorrichtung 26 weist ferner vorzugsweise wenigstens einen Austritt 56 mit wenigstens einem Austrittsanschluss 58 auf. Über den Austritt 56 kann beispielsweise die Flüssigkeit 12 aus dem Sammelbereich 40 abgeführt werden. Hierzu kann beispielsweise an den Austrittsanschluss 58 eine weitere Leitung angeschlossen werden, sodass die Flüssigkeit 12 aus dem Sammelbereich 40 aus- und in die weitere Leitung einströmen kann, insbesondere über den Austrittsanschluss 58. Somit ist der Austritt 56 ein Ausgang für die Flüssigkeit 12. Beispielsweise kann an den Austrittsanschluss 58 ein Ventil, insbesondere ein Tieftemperatur-Ventil, angeschlossen werden, über welches die Flüssigkeit 12 aus dem Sammelbereich 40 abgeführt werden kann.

Der Kanal 34 und der Kanal 42 weisen jeweils einen ersten Kanalabschnitt 60 und einen zweiten Kanalabschnitt 62 auf, welcher auf einem dem Sammelbereich 40 zugewandten Innenseite 65 des ersten Kanalabschnitts 60 angeordnet ist. Dies bedeutet, dass die den Kanalabschnitt 62 bildenden Windungen des Kanals 34 beziehungsweise 42 innenseitig der Windungen angeordnet sind, die den Kanalabschnitt 60 des Kanals 34 beziehungsweise 42 bilden. Auf seinem Weg von dem Eintritt 30 zu der Expansionsdüse 36 strömt beispielsweise das Gas durch den Kanalabschnitt 60 des Kanals 34 in die Funktionsrichtung und somit bezogen auf die Einbaulage nach unten, wobei das Gas spiralförmig strömt. Das Gas strömt dabei beispielsweise durch den Kanalabschnitt 62 des Kanals 34 entgegen der Funktionsrichtung und somit bezogen auf die Einbaulage nach oben, wobei das Gas durch den Kanalabschnitt 62 spiralförmig strömt. Da die Wärmetauschereinrichtung 20 als der Gegenstrom-Wärmetauscher 32 ausgebildet ist, strömt beispielsweise die gasförmige Phase auf ihrem Weg von der genannten Einströmöffnung zu dem Entspannungsgasaustritt durch den Kanalabschnitt 60 des Kanals 42 beispielsweise entgegen der Funktionsrichtung und somit bezogen auf die Einbaulage nach oben sowie durch den Kanalabschnitt 62 des Kanals 42 in die Funktionsrichtung und somit bezogen auf die Einbaulage nach unten, sodass die den Kanal 42 durchströmende gasförmige Phase in dem jeweiligen Kanalabschnitt 60 beziehungsweise 62 dem Gas entgegenströmt. Auf ihrem Weg von der Einströmöffnung zu dem Entspannungsgasaustritt strömt die gasförmige Phase beispielsweise zuerst durch den Kanalabschnitt 60 des Kanals 42 und dann durch den Kanalabschnitt 62 des Kanals 42 oder aber zunächst durch den Kanalabschnitt 62 des Kanals 42 und dann durch den Kanalabschnitt 60 des Kanals 42. Auf diese Weise kann das Gas effektiv und effizient mittels der gasförmigen Phase gekühlt werden.

Durch die beschriebene Anordnung der Kanalabschnitte 60 und 62 der Kanäle 34 und 42 können besonders große Längen der Kanäle 34 und 42 realisiert werden, während der Bauraumbedarf der Vorrichtung 26 besonders gering gehalten werden kann. Insbesondere weist vorzugsweise der jeweilige Kanal 34 beziehungsweise 42 eine Länge von wenigstens 10 Metern, bevorzugt von mindestens 20 Metern auf.

Wie besonders gut aus FIG 3 und 4 erkennbar ist, weist der Aerosolbrecher 38 vorzugsweise eine Mehrzahl von zumindest im Wesentlichen trichterförmigen und aufeinander angeordneten beziehungsweise aufeinanderfolgenden Schichten 64 mit jeweiligen, in Umfangsrichtung des Aerosolbrechers 38 voneinander beabstandeten Brecherplatten 66 auf. Dabei mündet die Expansionsdüse 36 in einen durch den Aerosolbrecher 38 begrenzten Bereich 68.

Die Vorrichtung 26 weist darüber hinaus eine Isolation 70 mit wenigstens einem den Gegenstrom-Wärmetauscher 32 außenseitig zumindest überwiegend umgebenden Isolationsmantel 72 auf, welcher evakuiert ist. Somit ist die Isolation 70 als Vakuumisolation ausgebildet, welche auch als Vakuum-Isolierung bezeichnet wird. Durch die Vakuum-Isolierung kann eine besonders hohe Energieeffizienz ohne Zusatzkosten realisiert werden. Durch die Vakuum-Isolierung können Vakuumzonen geschaffen werden, um dadurch beispielsweise unterschiedliche Bereiche der einstückigen Vorrichtung 26 thermisch voneinander zu entkoppeln. Der integrierte Aerosolbrecher 38 ist vorzugsweise als Demistor ausgebildet. Insbesondere weist der Sammelbereich 40 vorzugsweise eine Kapazität von zirka einem Liter der Flüssigkeit 12 auf. Auch die Expansionsdüse 36 ist aufgrund der einstückigen Ausgestaltung der Vorrichtung 26 in diese integriert. Durch den Aufbau der Vorrichtung 26 lässt sich eine intrinsisch druckfeste Konstruktion bei hohem Wärmeaustausch durch eng dimensionierte Wandlängen und durch benachbarte Strukturen realisieren.

Aus FIG 2 ist erkennbar, dass die Vorrichtung 26 einen Vakuumisolierungsanschluss 74 aufweist. Über den Vakuumisolierungsanschluss 74 kann beispielsweise der Isolationsmantel 72 isoliert werden, insbesondere kann an dem Vakuumisolierungsanschluss 74 ein Isolierungsventil und/oder eine Leitung angeschlossen werden, über das beziehungsweise die der Isolationsmantel 72 evakuiert wird beziehungsweise evakuiert werden kann.

Aus FIG 5 ist besonders gut erkennbar, dass die Expansionsdüse 36 einen durch eine innenumfangsseitige Mantelfläche 76 eines ersten Düsenkörpers 78 der Expansionsdüse 36 begrenzten Düsenkanal 80 aufweist, welcher von dem Gas durchströmbar ist. Der Düsenkanal 80 mündet über eine Ausströmöffnung 82 der Expansionsdüse 36 in den Aerosolbrecher 38, insbesondere in den durch diesen begrenzten Bereich 68.

Die innenumfangsseitige Mantelfläche 76 begrenzt einen Längenbereich L des Düsenkanals 80, wobei sich der Längenbereich L in Strömungsrichtung des den Düsenkanal 80 durchströmenden Gases verjüngt.

In dem Düsenkanal 80 und insbesondere zumindest in einem Teil des Längenbereichs L ist ein zweiter Düsenkörper 84 der Expansionsdüse 36 angeordnet. Da die Vorrichtung 26 insgesamt einstückig ausgebildet ist, sind die Düsenkörper 78 und 84 einstückig miteinander ausgebildet. Der Düsenkörper 84 ist über jeweilige Stege 86 an der innenumfangsseitigen Mantelfläche 76 und somit an dem Düsenkörper 78 gehalten und von der innenumfangsseitigen Mantelfläche 76 beziehungsweise von dem Düsenkörper 78 beabstandet, sodass das den Düsenkanal 80 durchströmende Gas zwischen dem Düsenkörper 78, insbesondere der innenumfangsseitigen Mantelfläche 76, und dem Düsenkörper 84, insbesondere einer außenumfangsseitigen Mantelfläche 88 des Düsenkörpers 84, hindurchströmen kann. Die innenumfangsseitige Mantelfläche 76 und die außenumfangsseitige Mantelfläche 88 begrenzen dabei einen von dem den Düsenkanal 80 durchströmenden Gas durchströmbaren Düsenquerschnitt 90, welcher sich in Strömungsrichtung des den Düsenkanal 80 durchströmenden Gases und somit zum Bereich 68 hin verjüngt.

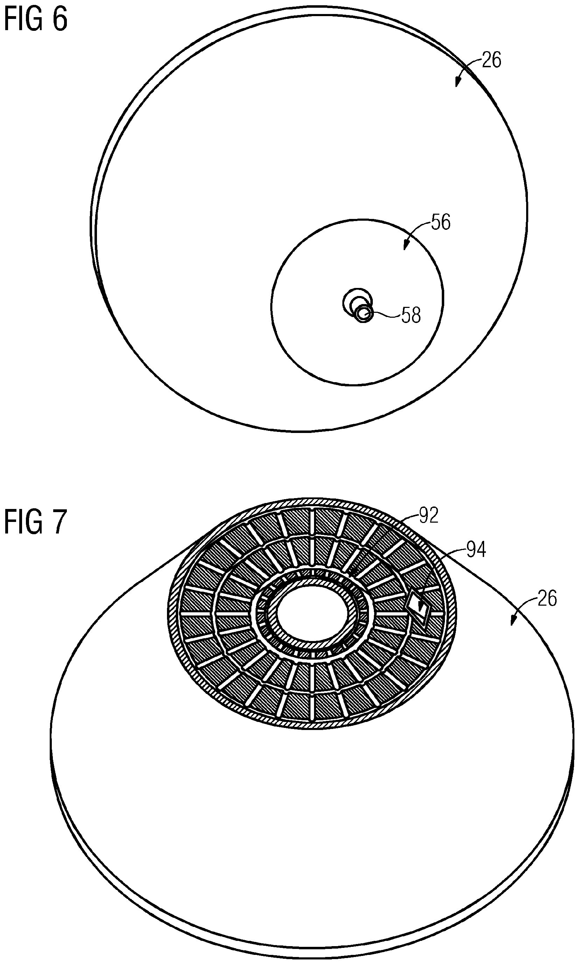

FIG 6 zeigt die Vorrichtung 26 in einer schematischen Unteransicht, wobei aus FIG 6 besonders gut der Austritt 56 mit dem Austrittsanschluss 58 erkennbar ist.

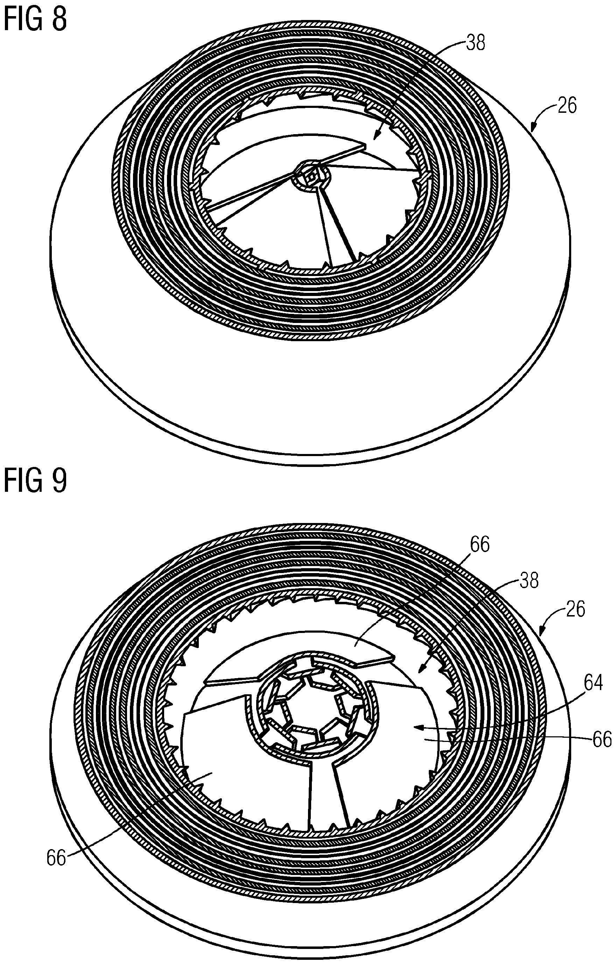

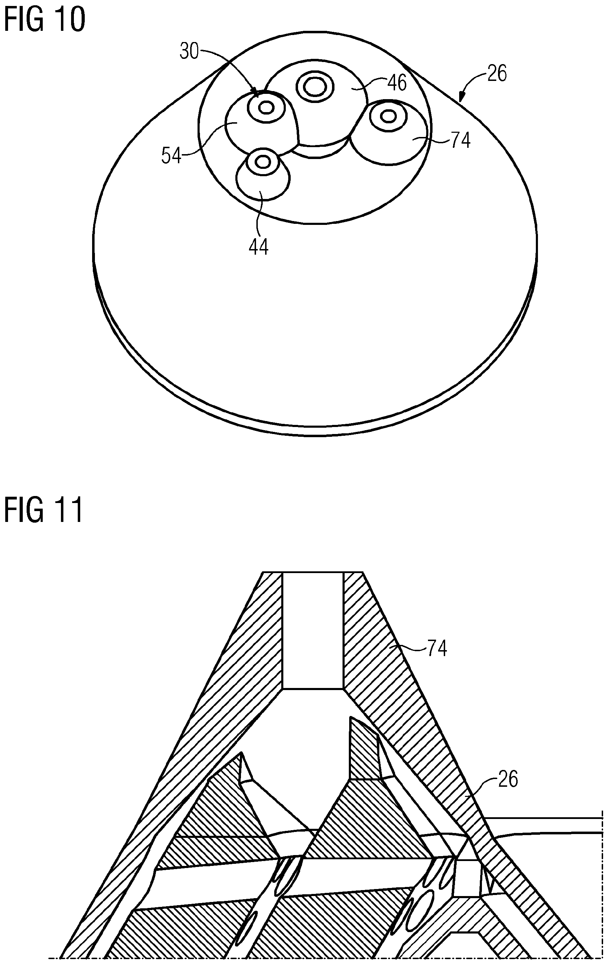

FIG 7 zeigt die Vorrichtung 26 in einer schematischen Querschnittsansicht, wobei in FIG 7 eine von dem Druckgas durchströmbare Führung 92 und eine von dem Entspannungsgas durchströmbare Führung 94 erkennbar sind. Die Führung 92 ist beispielsweise Bestandteil des Kanals 34, während die Führung 94 beispielsweise Bestandteil des Kanals 42 ist. FIG 8 bis 10 zeigen die Vorrichtung 26 in weiteren perspektivischen Querschnittsansichten. Dabei sind besonders gut aus FIG 9 die Schichten 64 des Aerosolbrechers 38 sowie die Brecherplatten 66 erkennbar. Besonders gut aus FIG 10 erkennbar sind der Eintritt 30 mit dem Eintrittsanschluss 54, der Berstventilanschluss 46, der Vakuumisolierungsanschluss 74 und der Austritt 44.

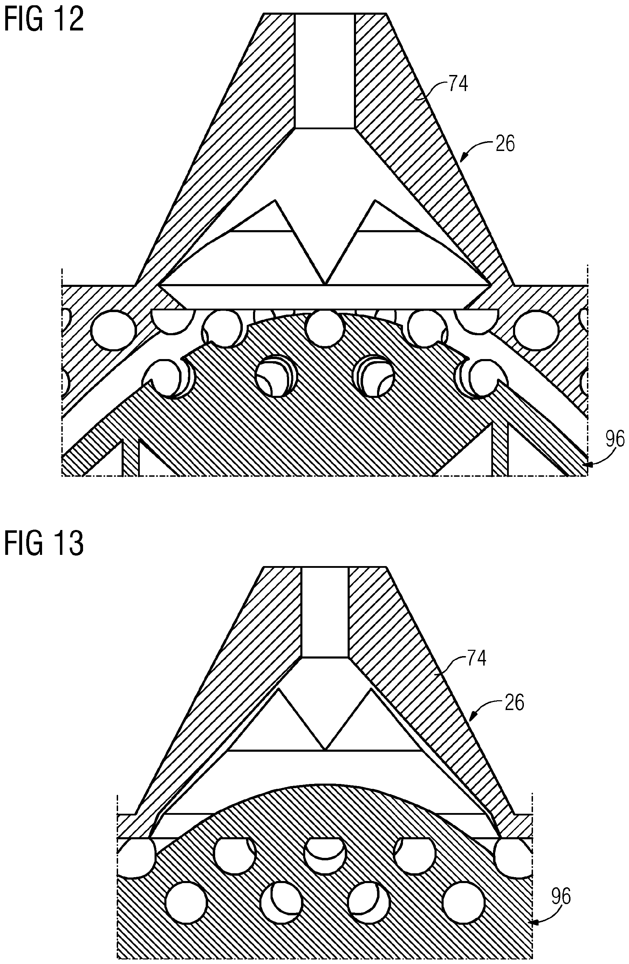

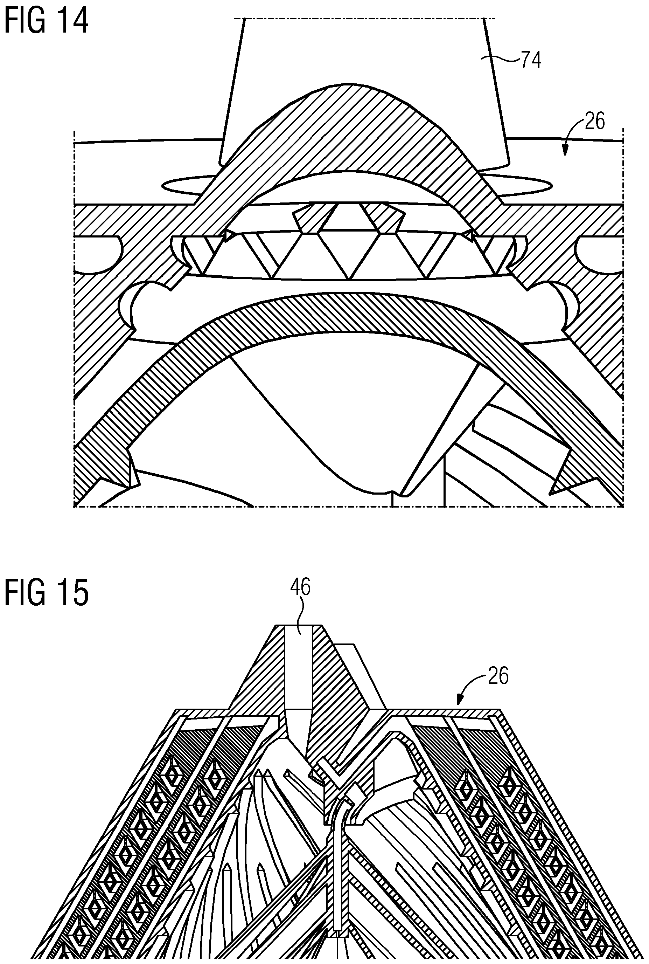

Schließlich zeigen FIG 11 bis 15 die Vorrichtung 26 ausschnittsweise in jeweiligen schematischen Längsschnittansichten, um beispielsweise den auch als Vakuumanschluss bezeichneten Vakuumisolierungsanschluss 74 näher zu veranschaulichen. Aus FIG 12 und 13 sind beispielsweise besonders gut Löcher 96 erkennbar, über welche beispielsweise ein Werkstoff, aus welchem die Vorrichtung 26 insbesondere durch das generative Fertigungsverfahren hergestellt wird und welcher im Rahmen des generativen Fertigungsverfahrens nicht geschmolzen wird sondern in Pulverform verbleibt, aus der Vorrichtung 26, insbesondere aus dessen Inneren, entfernt und an die Umgebung der Vorrichtung 26 gefördert werden kann. Dabei zeigt FIG 15 den Berstventilanschluss 46 in einer Detailansicht. Die jeweilige Länge des jeweiligen Kanals 34 beziehungsweise 42 beträgt beispielsweise wenigstens 21 Meter, insbesondere zirka 21,6 Meter. Die Vorrichtung 26 ist beispielsweise aus einem metallischen Werkstoff gebildet, wobei beispielsweise ein verbautes Metallvolumen von zirka 4 Litern vorgesehen ist, um die Vorrichtung 26 herzustellen.

## Patentansprüche

1. Vorrichtung (26) zum Verflüssigen wenigstens eines Gases, mit:
- wenigstens einem Eintritt (30), über welchen das unter Druck stehende Gas in die Vorrichtung (26) einleitbar ist;
- wenigstens einem Gegenstrom-Wärmetauscher (32), welcher wenigstens einen über den Eintritt (30) mit dem unter Druck stehenden Gas versorgbaren und in eine erste Richtung von dem Gas durchströmbaren ersten Kanal (34) aufweist,
- wenigstens einer Expansionsdüse (36), in welche der erste Kanal (34) mündet, sodass das von dem ersten Kanal (34) in die Expansionsdüse (36) strömende, die Expansionsdüse (36) durchströmende und aus der Expansionsdüse (36) ausströmende Gas mittels der Expansionsdüse (36) unter Bildung eines eine gasförmige Phase und flüssige Tropfen umfassenden Aerosols expandierbar ist;
- einen Aerosolbrecher (38), mittels welchem zumindest ein Teil der Tropfen von der gasförmigen Phase abscheidbar ist;
- einen Sammelbereich (40) zum Auffangen und Sammeln der von dem Aerosolbrecher (38) abtropfenden Tropfen; und
- einen den ersten Kanal (34) umgebenden zweiten Kanal (42) des Gegenstrom-Wärmetauschers (32), wobei der zweite Kanal (42) in eine der ersten Richtung entgegengesetzte zweite Richtung von der gegenüber dem Gas entspannten und kälteren und aus der Expansionsdüse (36) ausströmenden gasförmigen Phase durchströmbar ist und den ersten Kanal (34) umgibt,
**dadurch gekennzeichnet, dass** die Vorrichtung (26) einstückig ausgebildet ist.

2. Vorrichtung (26) nach Anspruch 1,
wobei die Vorrichtung (26) eine Isolation (70) mit wenigstens einem den Gegenstrom-Wärmetauscher (32) umgebenden Isolationsmantel (72) aufweist, welcher evakuiert ist.

3. Vorrichtung (26) nach Anspruch 1 oder 2,
wobei die Vorrichtung (26) durch ein generatives Fertigungsverfahren, insbesondere durch Methoden der generativen Fertigung beziehungswiese des 3D-Druckens, hergestellt ist.

4. Vorrichtung (26) nach einem der vorhergehenden Ansprüche, bei der die Kanäle (34, 42) spiralförmig verlaufen.

5. Vorrichtung (26) nach einem der vorhergehenden Ansprüche, bei der die Kanäle (34, 42) mindestens einen ersten Kanalabschnitt (60) und einen zweiten Kanalabschnitt (62) aufweisen, wobei der zweite Kanalabschnitt (62) auf einer dem Sammelbereich (40) zugewandten Innenseite (65) des ersten Kanalabschnitts (60) angeordnet ist.

6. Vorrichtung (26) nach einem der vorhergehenden Ansprüche, bei der die Kanäle (34, 42) eine Länge von wenigstens 10 Metern aufweisen.

7. Vorrichtung (26) nach einem der vorhergehenden Ansprüche, wobei der Aerosolbrecher (38) eine Mehrzahl von trichterförmigen, aufeinander angeordneten Schichten (64) mit jeweiligen, in Umfangsrichtung des Aerosolbrechers (38) voneinander beabstandeten Brecherplatten (66) aufweist.

8. Vorrichtung (26) nach einem der vorhergehenden Ansprüche, wobei die Expansionsdüse (36) in einen durch den Aerosolbrecher (38) begrenzten Bereich (68) mündet.

9. Vorrichtung (26) nach einem der vorhergehenden Ansprüche, wobei die Expansionsdüse (36) einen durch eine innenumfangsseitige Mantelfläche (76) eines ersten Düsenkörpers (78) der Expansionsdüse (36) begrenzten Düsenkanal (80) aufweist, in welchem ein zweiter Düsenkörper (84) angeordnet ist, welcher über Stege (86) an der innenumfangsseitigen Mantelfläche (76) gehalten und von der innenumfangsseitigen Mantelfläche (76) beabstandet ist, sodass die innenumfangsseitige Mantelfläche (76) und der zweite Düsenkörper (84) einen sich in Strömungsrichtung des den Düsenkanal (80) durchströmenden Gases verjüngenden Düsenquerschnitt (90) begrenzen.

10. Vorrichtung (26) nach einem der vorhergehenden Ansprüche, wobei die Vorrichtung (26) aus einem metallischen Werkstoff gebildet ist.

11. Anlage (10) zum Verflüssigen wenigstens eines Gases, mit wenigstens einer Vorrichtung (26) nach einem der vorhergehenden Ansprüche.

## Claims

1. Apparatus (26) for liquefying at least one gas, comprising:
- at least one inlet (30) via which the pressurized gas can be introduced into the apparatus (26);
- at least one countercurrent heat exchanger (32) having at least one first channel (34) that can be supplied with the pressurized gas via the inlet (30) and through which gas flow is possible in a first direction,
- at least one expansion nozzle (36) into which the first channel (34) opens, such that the gas that flows from the first channel (34) into the expansion nozzle (36), flows through the expansion nozzle (36) and flows out of the expansion nozzle (36) is expandable by means of the expansion nozzle (36) to form an aerosol comprising a gaseous phase and liquid droplets;
- an aerosol breaker (38) by means of which at least some of the droplets can be separated out of the gaseous phase;
- a collecting region (40) for gathering and collecting the droplets dripping off the aerosol breaker (38); and
- a second channel (42) of the countercurrent heat exchanger (32) that surrounds the first channel (34), wherein flow of the gaseous phase flowing out of the expansion nozzle (36) that has been decompressed and is colder compared to the gas through the second channel (42) is possible in a second direction that is the opposite of the first direction and the second channel (42) surrounds the first channel (34), **characterized in that** the apparatus (26) is in one-piece form.

2. Apparatus (26) according to Claim 1,
wherein the apparatus (26) has an insulation (70) with at least one evacuated insulation jacket (72) that surrounds the countercurrent heat exchanger (32).

3. Apparatus (26) according to Claim 1 or 2,
wherein the apparatus (26) has been produced by an additive manufacturing method, especially by methods of additive manufacturing or 3D printing.

4. Apparatus (26) according to any of the preceding claims, in which the channels (34, 42) run in a spiral.

5. Apparatus (26) according to any of the preceding claims,
in which the channels (34, 42) have at least a first channel section (60) and a second channel section (62), wherein the second channel section (62) is disposed on an inside (65) of the first channel section (60) facing the collecting region (40) .

6. Apparatus (26) according to any of the preceding claims,
in which the channels (34, 42) have a length of at least 10 meters.

7. Apparatus (26) according to any of the preceding claims, wherein the aerosol breaker (38) has a multitude of funnelshaped layers (64) arranged one on top of another, each with breaker plates (66) spaced apart from one another in circumferential direction of the aerosol breaker (38).

8. Apparatus (26) according to any of the preceding claims, wherein the expansion nozzle (36) opens into a region (68) bounded by the aerosol breaker (38).

9. Apparatus (26) according to any of the preceding claims, wherein the expansion nozzle (36) has a nozzle channel (80) which is bounded by an inner circumferential face (76) of a first nozzle body (78) of the expansion nozzle (36), and in which a second nozzle body (84) is disposed and is retained and spaced apart from the inner circumferential face (76) by means of lands (86) on the inner circumferential face (76), such that the inner circumferential face (76) and the second nozzle body (84) bound a nozzle cross section (90) that narrows in flow direction of the gas flowing through the nozzle channel (80).

10. Apparatus (26) according to any of the preceding claims, wherein the apparatus (26) is formed from a metallic material.

11. Plant (10) for liquefying at least one gas, comprising at least one apparatus (26) according to any of the preceding claims.

## Revendications

1. Dispositif (26) de liquéfaction d'au moins un gaz, comprenant :
- au moins une entrée (30), par laquelle le gaz sous pression peut être introduit dans le dispositif (26) ;
- au moins un échangeur de chaleur (32) à contrecourant, qui a au moins un premier conduit (34) pouvant être alimenté en le gaz sous pression par l'entrée (30) et dans lequel le gaz peut passer dans un premier sens ;
- au moins une buse (36) de détente, dans laquelle le premier conduit (34) débouche, de manière à ce que le gaz, allant du premier conduit (34) à la buse (36) de détente, passant dans la buse (36) de détente et sortant de la buse (36) de détente, puisse se détendre au moyen de la buse (36) de détente avec formation d'un aérosol comprenant une phase gazeuse et des gouttes liquides ;
- un brise aérosol (38), au moyen duquel au moins une partie des gouttes peut être séparée de la phase gazeuse ;
- une partie (40) de recueil pour capter et recueillir les gouttes s'écoulant du brise aérosol (38) ; et
- un deuxième conduit (42), entourant le premier conduit (34), de l'échangeur de chaleur (32) à contrecourant, dans lequel la phase gazeuse, détendue par rapport au gaz et plus froide et sortant de la buse (36) de détente, peut passer dans le deuxième conduit (42) dans un deuxième sens contraire au premier sens et le deuxième conduit (42) entoure le premier conduit (34),
**caractérisé en ce que** le dispositif (26) est constitué d'une seule pièce.

2. Dispositif (26) suivant la revendication 1,
dans lequel le dispositif (26) a une isolation (70) ayant au moins une enveloppe (72) d'isolation, qui entoure l'échangeur de chaleur (32) à contrecourant et qui est sous vide.

3. Dispositif (26) suivant la revendication 1 ou 2,
dans lequel le dispositif (26) est fabriqué par un procédé de fabrication génératif, en particulier par des méthodes de la fabrication générative ou de l'impression en 3D.

4. Dispositif (26) suivant l'une des revendications précédentes,
dans lequel les conduits (34, 42) s'étendent en forme de spirale.

5. Dispositif (26) suivant l'une des revendications précédentes,
dans lequel les conduits (34, 42) ont au moins un premier tronçon (60) de conduit et un deuxième tronçon (62) de conduit, dans lequel le deuxième tronçon (62) de conduit est disposé d'un côté (65) intérieur, tourné vers la partie (40) de recueil, du premier tronçon (60) de conduit.

6. Dispositif (26) suivant l'une des revendications précédentes,
dans lequel les conduits (34, 42) ont une longueur d'au moins 10 mètres.

7. Dispositif (26) suivant l'une des revendications précédentes,
dans lequel le brise aérosol (38) a une pluralité de couches (64) en forme de trémies et disposées les unes sur les autres, ayant des plaques (66) respectives de brisure à distance les unes des autres dans la direction périphérique du brise aérosol (38).

8. Dispositif (26) suivant l'une des revendications précédentes,
dans lequel la buse (36) de détente débouche dans une partie (68) délimitée par le brise aérosol (38).

9. Dispositif (26) suivant l'une des revendications précédentes,
dans lequel la buse (36) de détente a un conduit (80) de buse, délimité par une surface (76) latérale, du côté du pourtour intérieur, d'un premier corps (78) de la buse (36) de détente, conduit dans lequel est monté un deuxième corps (84) de buse, qui est maintenu sur la surface (76) latérale du côté du pourtour intérieur par des entretoises (86) et qui est à distance de la surface (76) latérale du côté du pourtour intérieur, de manière à ce que la surface (76) latérale du côté du pourtour intérieur et le deuxième corps (84) de la buse délimitent une section (90) transversale de la buse se rétrécissant dans le sens d'écoulement du gaz passant dans le conduit (80) de la buse.

10. Dispositif (26) suivant l'une des revendications précédentes,
dans lequel le dispositif (26) est en un matériau métallique.

11. Installation (10) de liquéfaction d'au moins un gaz, comprenant au moins un dispositif (26) suivant l'une des revendications précédentes.
